# EUROPÄISCHE PATENTSCHRIFT

(11) **EP 1 254 852 B1**
(45) Veröffentlichungstag und Bekanntmachung des Hinweises auf die Patenterteilung: **23.07.2008**
(21) Anmeldenummer: 02008136.0
(22) Anmeldetag: 11.04.2002
(51) Int. Cl.: B65G 1/04

(54) **Lager- und Transportsystem in modularer Bauweise**
Storing- and conveying system of modular construction
Système de stockage et de transport de construction modulaire

(30) Priorität: 03.05.2001 DE 10121577; 30.08.2001 DE 10142395
(43) Veröffentlichungstag der Anmeldung: 06.11.2002
(73) Patentinhaber: Dematic GmbH, 63073 Offenbach am Main (DE)
(72) Erfinder: Hompel, Michael, Prof. Dr., 44229 Dortmund (DE); Jungbluth, Volker, Dipl. Ing., 44149 Dortmund (DE); Schroer, Winfried, Dipl.-Ing., 44581 Castrop-Rauxel (DE)
(74) Vertreter: Moser & Götze

(56) Entgegenhaltungen:
- DE-A- 2 740 862
- DE-B- 1 055 043
- GB-A- 1 333 745
- US-A- 4 691 385
- US-A- 5 293 308
- US-A- 5 967 728
- US-B1- 6 213 025

## Beschreibung

### Technisches Anwendungsgebiet

Die vorliegende Erfindung betrifft ein Lager- und Transportsystem mit beliebiger Anzahl von Regalzeilen zur Aufnahme von Lagergut in mehreren Regalebenen, einer Vielzahl von Schienenwegen, die auf Höhe der einzelnen Regalebenen zwischen den Regalen angeordnet sind, mehreren schienengebundenen Fahrzeugen mit Mitteln zur Aufnahme und Abgabe des Lagergutes, einem Fahrwerk sowie Antrieben zur Fortbewegung auf den Schienenwegen, und Mitteln zur Umsetzung der Fahrzeuge zwischen den Regalebenen.

Die Optimierung des Materialflusses bei der Ein- oder Auslagerung von Gütern in bzw. aus Lagern spielt heutzutage gerade unter Kostenaspekten eine sehr große Rolle. Die Güter müssen aus dem Lager über eine Lagervorzone an die Zielpunkte, bspw. Kommissionierplätze, transportiert bzw. von Anlieferungsbereichen über die Vorzone an ihren Lagerungsort transportiert werden. Die Komplexität leistungsstarker Lagersysteme wird dabei zumeist durch die Lagervorzone bestimmt. Diese Lagervorzone umfasst in der Regel förder- und steuerungstechnisch sehr anspruchsvolle Verteil-, Puffer- und Sortieranlagen. Diese Komponenten stellen zumeist den größten Anteil des Investitionsvolumens beim Aufbau der Lagersysteme. Stillstände der Anlagen sind häufig auf den Ausfall einzelner Antriebe oder steuerungstechnischer Bauteile in der Vorzone zurückzuführen, da nur wenige Komponenten redundant auszuführen sind.

Bei bekannten Lagersystemen existiert eine klare Trennung zwischen den Lagermitteln, mit denen die Güter von den Fördermitteln der Vorzone übernommen und in die Lagerplätze eingelagert bzw. aus diesen ausgelagert werden, und den Fördermitteln der Vorzone, mit denen die Güter zu ihren Zielpunkten bzw. von ihren Ausgangspunkten zum Lager transportiert werden. Durch diese Trennung zwischen Lager- und Fördermitteln entsteht eine definierte Schnittstelle, die Gegenstand zahlreicher Untersuchungen zur Optimierung des Materialflusses sind. Die unterschiedlichen Systeme auf beiden Seiten dieser Schnittstelle, bspw. herkömmliche Regalbediengeräte auf der einen und Stetigförderer auf der anderen Seite, stellen hohe Anforderungen an die bedarfsgerechte Planung bekannter Lagersysteme.

### Stand der Technik

In der Lager- und Transporttechnik existiert eine Vielzahl unterschiedlicher, automatisierter Anlagen zur Lagerhaltung. Herkömmliche Lagersysteme, die vielfältigen Einsatz in der Industrie finden, setzen in der Regel Regalbediengeräte, die in einer Regal- bzw. Lagergasse verfahren, und Stetigförderer ein, die den Transport von den Regalen zu den Zielpunkten übernehmen. Die Entnahme von Lagergütern aus den Regalen erfolgt mit den unterschiedlichsten Lastaufnahmemitteln, die auf das jeweilige Lagergut abgestimmt sind. Diese von den Regalbediengeräten getragenen Lastaufnahmemittel bestehen zumeist aus Teleskopgabeln, Teleskoptischen, Ziehvorrichtungen, Greifern oder Riemenförderern. Die Lastaufnahmemittel können auch als Mehrfach-Lastaufnahmemittel ausgeführt sein, so dass bei einmaliger Fahrt des Regalbediengerätes bei Palettenlagerung bis zu zwei Ladeeinheiten, bei Behältern bis zu acht Ladeeinheiten entnommen werden können. Am meisten verbreitet sind jedoch Einfach-Lastaufnahmemittel bei der Palettenlagerung und Doppel-Lastaufnahmemittel in der Behälterlagertechnik.

Nach der Entnahme des Lagergutes aus dem Regal verfährt das Regalbediengerät zur Übergabezone. Dort erfolgt ein Lastwechsel zumeist auf Stetigfördertechnik. Diese nachgeschaltete Fördertechnik, die in der Vorzone angesiedelt ist, kann vielfältige Aufgaben übernehmen. So können auf staufähigen Förderbahnen die Artikel eines Auftrages gepuffert werden, bis die zugehörigen Auslagerungen komplett abgeschlossen sind. Anschließend erfolgt die Weiterleitung zu den Zielpunkten, bspw. einem oder mehreren Kommissionierplätzen. Weiterhin kann diese Fördertechnik die Sortierung der Artikel vornehmen, so dass diese in einer vorgewählten Reihenfolge zu ihrem Zielpunkt gefördert werden.

Die in herkömmlichen Lagersystemen in der Vorzone eingesetzte Standardfördertechnik wird von vielen Herstellern angeboten. Es existieren verschiedene Möglichkeiten zur Pufferung der Waren auf den Staustrecken. Alle vorhandenen Techniken basieren hierbei auf dem Prinzip der Reibung und sind daher verschleißanfällig. Des Weiteren kann es durch die Förderung der Güter auf Rollenbahnen zu einem erhöhten Schalldruckpegel kommen, der gerade bei Vorhandensein von manuellen Kommissionierarbeitsplätzen im unmittelbaren Umfeld unerwünscht ist. Ein Nachteil des Einsatzes von Regalbediengeräten besteht darin, dass während der Fahrten des Regalbediengerätes die Lagergasse für weitere Lagervorgänge blockiert ist. Herkömmliche Regalbediengeräte sind zudem in ihren Leistungsdaten beschränkt. Sie weisen eine physikalische Leistungsgrenze auf, die nach Erreichen nicht weiter gesteigert werden kann. Sollte diese Leistungsgrenze erreicht sein, so muss das Lagerkonzept aufwendig erweitert werden, zumeist durch ein weiteres eigenständiges Lagersystem. Dies hat zur Folge, dass Lagersysteme größtenteils überdimensioniert werden müssen, was höhere Investitionskosten nach sich zieht. Eine einfache und kostengünstige Erweiterung derartiger Lagersysteme ist nicht möglich.

Eine weitere Möglichkeit zur Entnahme der Lagergüter aus dem Regal stellen Satellitenfahrzeuge dar, wie sie bspw. vom Fraunhofer-Institut für Materialfluss und Logistik in Dortmund entwickelt wurden. Das entsprechende Lagersystem weist mehrere Regalzeilen zur Aufnahme von Lagergut in mehreren Regalebenen mit einer Vielzahl von Schienenwegen auf, die zumindest auf Höhe der einzelnen Regalebenen zwischen den Regalen angeordnet sind. Die Satellitenfahrzeuge, die in diesen Schienen fahren, sind mit einem Lastaufnahmemittel zur Aufnahme und Abgabe des Lagergutes, einem Fahrwerk sowie Antrieben zur Fortbewegung auf den Schienenwegen ausgestattet. Weiterhin sind Mittel vorgesehen, die die einzelnen Fahrzeuge zwischen den Regalebenen umsetzen. Die Umsetzung kann hierbei durch herkömmliche Regalbediengeräte oder durch Liftsysteme erfolgen. Die Schienen bzw. die als Schienen dienende Profile an den Regalen dienen gleichzeitig als vorderste Palettenauflage für die Einlagerung der Güter.

Ein Vorteil dieser Satellitentechnik besteht darin, dass gleichzeitig mehrere Fahrzeuge in einer Lagergasse fahren können. Mit diesem Konzept ist daher eine Leistungssteigerung gegenüber herkömmlichen Regalbediengeräten möglich.

Die bisher realisierten Satellitenfahrzeuge sind mit Akkumulatoren zur Energieversorgung der Antriebe sowie mit einer aufwendigen Steuerungshardware ausgestattet, die die Fahrzeuge nach Erhalt des Transportauftrages von einem zentralen Lagerverwaltungsrechner zur Abarbeitung des Transportauftrages direkt ansteuert. Ein Nachteil dieses Lager- und Transportsystems besteht jedoch darin, dass die Fahrzeuge aufgrund der Akkumulatoren und der Steuerung ein hohes Gewicht aufweisen, das bei derzeit realisierten Systemen bei etwa 1,2 Tonnen liegt, so dass eine Pufferung der Fahrzeuge auf aufgeständerten oder abgehangenen Schienen aufgrund dieses hohen Gewichtes nicht möglich ist. Aufgrund der hohen Kosten für ein derartiges Fahrzeug lässt sich auch hier eine Erweiterung eines Lagers zur Steigerung der Kapazität durch Einsatz weiterer Fahrzeuge nur mit relativ hohem Kostenaufwand durchführen.

Aus F+H Fördern und Heben 45 (1995) Nr. 12, Seiten 880/881 ist ein Lagersystem mit einer abgewandelten Satellitenfahrzeugtechnik bekannt. Bei diesem System mussten aufgrund von Explosionsschutzvorschriften die Energieversorgung und die Steuerung außerhalb des Lagerbereiches, d.h. getrennt von den Fahrzeugen angeordnet werden. Auch hier hat jedes Fahrzeug seine eigene Energieversorgung sowie seine eigene Steuerung, wobei die Energie- und Datenübertragung mit Hilfe von Schleppkabeln zwischen den Energieversorgungs- und Steuereinheiten und den einzelnen Fahrzeugen realisiert wird. Diese Technik ist jedoch nur bei Einsatz eines Fahrzeugs pro Lagergasse möglich.

Bei dem vorgestellten Konzept der Satellitenfahrzeuge werden jedoch weiterhin Umschlagvorgänge in der Vorzone durchgeführt, in der herkömmliche Stetigförderer zum Weitertransport der Lagegüter an die Zielpunkte eingesetzt werden.

Aus einer Entwicklung der Firma Retrotech Inc., New York, USA, ist ein Satellitenfahrzeug bekannt, das ein zuschaltbares Querfahrwerk aufweist. Durch dieses Querfahrwerk sind Transporte auch in der unmittelbaren Vorzone möglich, in der bei diesem Konzept ein schachbrettartig verlegtes Schienenmuster eingesetzt wird. Das zusätzlich erforderliche Fahrwerk führt jedoch zu einem höheren Eigengewicht des Fahrzeuges und zudem zu einem erhöhten Bauraum. Dies erfordert wiederum eine größere Fachhöhenteilung der Regale, damit zwei Fahrzeuge in benachbarten Ebenen fahren können. Die größere Fachhöhenteilung führt jedoch zu einer unerwünschten Reduzierung des Volumennutzungsgrades des Lagers. Durch die zusätzlichen Komponenten zum Querverfahren, weisen die Fahrzeuge noch höhere Gewichte auf, wodurch der Betrieb einer Vielzahl von Fahrzeugen im Regal nur durch einen aufwendig verstärkten Stahlbau möglich ist.

Im Bereich der Fördertechnik ist zum Transport größerer Gütermengen anstelle einer Stetigfördertechnik auch der Einsatz einer Elektrobodenbahn bekannt. Bei Elektrobodenbahn-Fahrzeugen handelt es sich um schienengebundene Fahrzeuge, die über einen eigenen Antrieb verfügen und über Schleifleitungen mit Energie- und Steuersignalen versorgt werden. Über geeignete Weichenanlagen in der Vorzone können die Elektrobodenbahnen beliebige Punkte im Hallenbereich anfahren. Die Fahrzeuge fahren unabhängig voneinander auf den Schienensystemen und steuern die entsprechenden Zielpunkte an. Die Elektrobodenbahn wird in erster Linie in der Automobilindustrie zum bodengebundenen Transport von Paletten und Gitterboxen eingesetzt.

Aus der GB 1 333 745 A ist ein Lager- und Transportsystem bekannt, bei dem schienengeführte Satellitenfahrzeuge das Regallager sowie die Vorzone bedienen. Die Fahrzeuge sind mit Hilfe eines Systemelements zwischen den einzelnen Ebenen des Lagers umsetzbar und werden über gesonderte Stromschienen per Schleifkontakt mit Energie versorgt. Die Steuerung der Transportaufgaben der Fahrzeuge kann über einen Computer erfolgen.

Aus der US 6,213,025 B1 ist ein spurgeführtes Transportsystem mit wenigstens einer Fahrstrecke aus Trag- und Spurführungselementen, auf der wenigstens ein Transportfahrzeug geführt ist, das Mittel zum selbsttätigen Fortbewegen längs der Fahrstrecke hat und auf das Energie von einem längs der Fahrstrecke verlegten Primärkreis berührungslos übertragen wird, bekannt. Das Transportfahrzeug ist als Trägerfahrzeug für wenigstens ein Satellitenfahrzeug zum Gütertransport ausgebildet und weist einen Satellitenfahrstreckenabschnitt für die Positionierung und das Parken des Satellitenfahrzeugs auf. Dem mit Mitteln zum selbsttätigen Fortbewegen ausgestatteten Satellitenfahrzeug wird Energie von einem längs der Satellitenfahrstrecken verlegten Primärkreis berührungslos per Induktion übertragen. Das wenigstens eine Satellitenfahrzeug und das Trägerfahrzeug weisen eine Prozessorkapazität und Mittel zur drahtlosen Informationsübertragung auf.

Ausgehend von diesem Stand der Technik besteht die Aufgabe der vorliegenden Erfindung darin, ein kombiniertes Lager- und Transportsystem bereitzustellen, das die obigen Nachteile vermeidet und eine einfache und kostengünstige modulare Erweiterung zur Erhöhung der Kapazität zulässt.

### Darstellung der Erfindung

Die Aufgabe wird mit dem Lager- und Transportsystem gemäß Patentanspruch 1 gelöst. Vorteilhafte Ausgestaltungen dieses Lager- und Transportsystems sind Gegenstand der Unteransprüche.

Das vorliegende Lager- und Transportsystem weist mehrere Regalzeilen zur Aufnahme von Lagergut in mehreren Regalebenen sowie eine Vielzahl von Schienenwegen auf, die auf Höhe der einzelnen Regalebenen zwischen den Regalen angeordnet sind. Das Transportsystem besteht aus mehreren schienengebundenen Fahrzeugen mit Mitteln zur Aufnahme und Abgabe des Lagergutes, einem Fahrwerk sowie Antrieben zur Fortbewegung auf den Schienenwegen. Weiterhin sind Mittel zur Umsetzung der Fahrzeuge zwischen den Regalebenen vorgesehen. Im Gegensatz zu den bekannten Satellitensystemen des Standes der Technik weisen die vorliegenden Fahrzeuge weder herkömmliche Akkumulatoren noch eine Steuerung auf. Es sind vielmehr Mittel zur kabellosen externen Energieversorgung der Fahrzeuge während ihres Betriebes vorgesehen. Weiterhin umfasst das System einen zentralen, immobilen Steuerrechner, der die Antriebe und die Mittel zur Aufnahme und Abgabe des Lagergutes der einzelnen Fahrzeuge unabhängig voneinander über eine Funkverbindung mit Steuersignalen zur Durchführung von Transportaufgaben ansteuert. Die Fahrzeuge sind hierfür mit einem Empfangssystem zum Empfang und zur Umsetzung der Steuersignale ausgestattet. Die Schienenwege sind beim vorliegenden Lager- und Transportsystem auch innerhalb der Vorzone bis hin zu den Zielpunkten verlegt, so dass die Zielpunkte durch die Fahrzeuge selbst erreicht werden können. Die Fahrzeuge weisen ferner einen Energiespeicher für eine kurzzeitige Energiespeicherung unter Verzicht auf herkömmliche Akkumulatortechnik auf.

Das Lager- und Transportsystem besteht somit aus vielen kompakten autonomen Fahrzeugen, die schienengebunden sowohl im Lagerbereich als auch in der Vorzone verfahren. Innerhalb der Regale können die Schienen gleichzeitig die vordere Auflage für die Lagergüter bilden. Die Schienen können im gesamten Betrieb flurfrei oder aufgeständert angebracht werden, um das Erreichen jedes Hallenbereiches zu gewährleisten. Der Ebenenwechsel in den Regalen erfolgt vorzugsweise mittels diskret stetigen Vertikalfördertechniken. Da die Fahrzeuge unabhängig voneinander durch einen zentralen Steuerrechner berührungslos gesteuert werden, wird eine zentral gesteuerte Fahrzeugflotte von flexibler Größe im gesamten Hallenbereich bzw. Firmengelände zur Verfügung gestellt, um Quellen entsorgen und Senken versorgen zu können. Jedes Fahrzeug wird hierbei vom Steuerrechner zur Abarbeitung eines Transportauftrages überwacht und angesteuert.

Durch die Bereitstellung eines kombinierten Lager- und Transportfahrzeuges wird die Schnittstelle zwischen Lagerbereich und Vorzone vermieden, so dass die mit dieser Schnittstelle verbundenen Probleme bei der Übergabe der Lagergüter zwischen zwei unterschiedlichen Systemen vermieden werden. Die kombinierten Lager- und Transportfahrzeuge können vielmehr jeden durch die Schienenverlegung vorgesehenen Zielpunkt im Hallenbereich direkt beliefern, ohne das Transportmittel wechseln zu müssen. Durch den Verzicht auf den Einsatz von Akkumulatoren sowie einer aufwendigen Steuereinheit in den Einzelfahrzeugen weisen diese ein relativ geringes Gewicht auf, das durch Leichtbauweise zusätzlich verringert werden kann. Es lassen sich somit Satellitenfahrzeuge mit einem Gewicht von unter 100 kg, beispielsweise von lediglich 70 - 80 kg, verwirklichen. Dieses geringe Gewicht ermöglicht einerseits die Pufferung einer Vielzahl von Fahrzeugen auf einer aufgeständerten oder abgehangenen Schienenstrecke und andererseits die Herstellung derartiger Fahrzeuge mit relativ geringen Kosten.

Das vorliegende Lager- und Transportsystem lässt sich daher sehr einfach und kostengünstig durch Hinzunahme einzelner Fahrzeuge erweitern. Weiterhin ermöglicht die zentrale Steuerung eine derartige Erweiterung ohne aufwendige Änderungen in der Steuerhard- oder - software. Mit der vorliegenden Technik können im Regalbereich sowie in der Vorzone nahezu beliebig viele Satellitenfahrzeuge bewegt werden, so dass die Leistungsgrenze in beträchtlichem Maße gesteigert werden kann.

Durch die modulare Erweiterbarkeit des vorgestellten Lagersystems werden ein hoher Flexibilitätsgrad, eine hohe Redundanz und eine beliebige Leistungsklasse erreicht, so dass alle Anforderungen im Lager- und Transportbereich erfüllt werden können.

In einer bevorzugten Ausführungsform des vorliegenden Systems enthält der Steuerrechner Mittel zur Ermittlung des optimalen Fahrweges für die Fahrzeuge unter Vermeidung von Kollisionen zwischen den Fahrzeugen bei Durchführung der Transportaufgaben. Der Steuerrechner übernimmt weiterhin die Ansteuerung von Sekundärsystemen wie Weichen des Schienensystems sowie die Ansteuerung der Mittel zur Umsetzung der Fahrzeuge zwischen einzelnen Regalebenen.

Vorzugsweise sind die Mittel zur externen Energieversorgung der Fahrzeuge durch eine Einrichtung zur Beaufschlagung der Schienenwege oder entlang der Schienenwege verlaufender Leiterpaare mit einer elektrischen Spannung zwischen den Schienen bzw. Leitern realisiert. Hierbei muss am Fahrzeug eine entsprechende Einheit zur Energieaufnahme von den Schienen bzw. Leitern vorhanden sein, die bspw. zur Herstellung eines Schleifkontaktes ausgebildet sein kann.

In einer weiteren vorteilhaften Ausbildung des vorliegenden Lager- und Transportsystems bestehen die Mittel zur externen Energieversorgung der Fahrzeuge aus einer Einrichtung zur berührungslosen Energieübertragung zu den Fahrzeugen. Derartige berührungslose Energieübertragungstechniken beruhen auf dem Prinzip der elektromagnetischen Induktion, wobei an den Schienenwegen bzw. im Fahrzeug entsprechenden Primär- und Sekundärspulen für die berührungslose Übertragung der Energie ausgebildet sein müssen.

Zur Versorgung kurzzeitiger Leistungsspitzen der Fahrzeuge, bspw. dem Losbrechmoment beim Anfahren, sind die Fahrzeuge vorzugsweise mit einer Energiespeichereinheit auf Basis von Kondensatoren ausgestattet. Dieses Energiespeichermedium weist ein sehr geringes Gewicht auf und eignet sich hervorragend zum Einsatz im Intervallbetrieb. Durch die stetige Energiezuführung mittels berührungsloser Energieübertragung oder durch Schwachstrom über Schleifkontakte werden diese auf Kondensatoren basierenden Energiespeicher schnell wieder geladen.

Das vorgeschlagene Lager- und Transportsystem besteht somit aus einzelnen Fahrzeugen, die im Regal und auf bspw. aufgeständerten oder abgehangenen Schienen verfahren und an jeder beliebigen Stelle Paletten oder Behälter aufnehmen und abgegeben können. Diese Fahrzeuge können beliebige durch das Schienensystem vorgegebene Ziele im Hallenbereich anfahren und auf beliebigen Streckenabschnitten gestaut bzw. gepuffert werden. Die Fahrzeuge werden von einem Zentralrechner per Funk gesteuert und navigiert. Die Umsetzung zwischen verschiedenen Regalebenen erfolgt über entsprechende Umsetzungsmittel, vorzugsweise Vertikalförderer. Die einzelnen Fahrzeuge verfügen über keine herkömmlichen Akkumulatoren und sind in sehr leichter Bauweise ausgeführt. Per Schleifleitung oder über berührungslose Energieübertragung werden die einzelnen Fahrzeuge mit der für den Antrieb erforderlichen Energie versorgt. Das vorliegende Lager- und Transportsystem zeichnet sich durch eine nahezu beliebig anpassbare Systemleistung aus. Bei einem Leistungsanstieg lässt sich das Lagersystem in einfacher und kostengünstiger Weise modular erweitern. Die Kombination von Lager- und Transportmitteln führt zur Vermeidung der Schnittstelle zwischen der Vorzone und dem Lager. Durch den Betrieb autonomer Einzelfahrzeuge wird eine hohe Redundanz des Gesamtsystems erreicht. Das System lässt sich weiterhin durch einfache Verlegung von Schienen in beliebige Werks-, Lager- oder Firmenbereiche erweitern.

### Kurze Beschreibung der Zeichnungen

Das vorliegende Lager- und Transportsystem wird nachfolgend anhand eines Ausführungsbeispiels in Verbindung mit den Zeichnungen ohne Beschränkung des allgemeinen Erfindungsgedankens nochmals kurz erläutert. Hierbei zeigen:
- Fig. 1: eine Seitenansicht eines Lagerbereiches des vorliegenden Lager- und Transportsystems als ein mögliches Ausführungsbeispiel;
- Fig. 2: schematisch eine beispielhafte Frontalansicht (a) des Lager- und Transportsystems sowie eine Draufsicht (b) von oben;
- Fig. 3: schematisch ein Beispiel für ein Fahrzeug des vorliegenden Lager- und Transportsystems in perspektivischer und in Seitenansicht; und
- Fig. 4: schematisch ein Beispiel für die Komponenten zur Funkübertragung vom Steuerrechner zu einem Einzelfahrzeug.

### Wege zur Ausführung der Erfindung

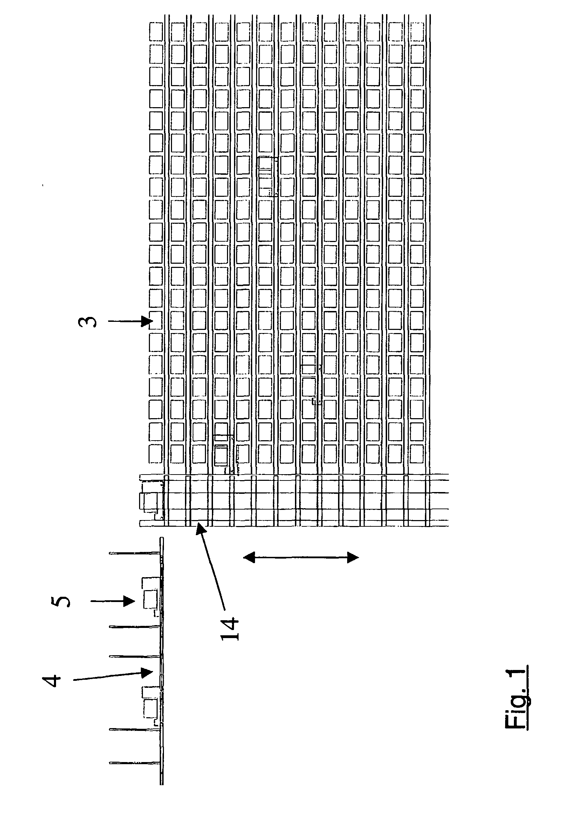

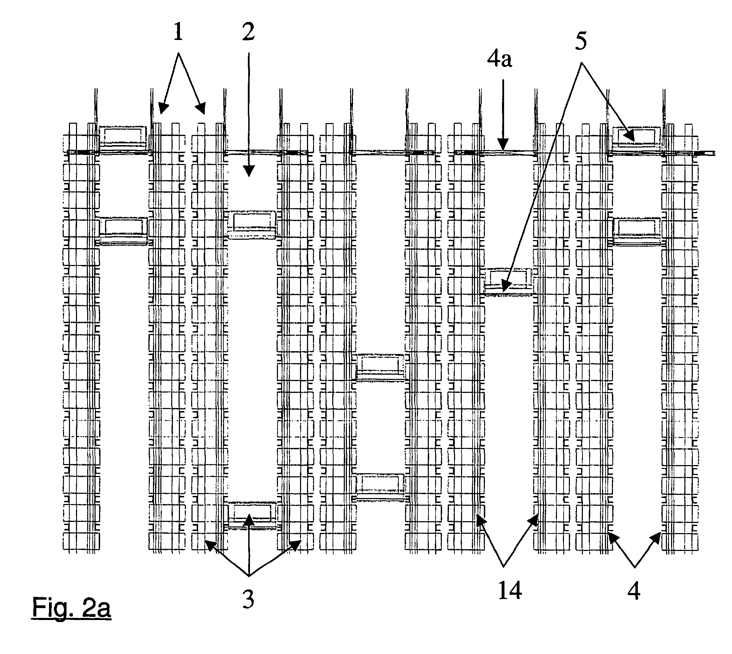

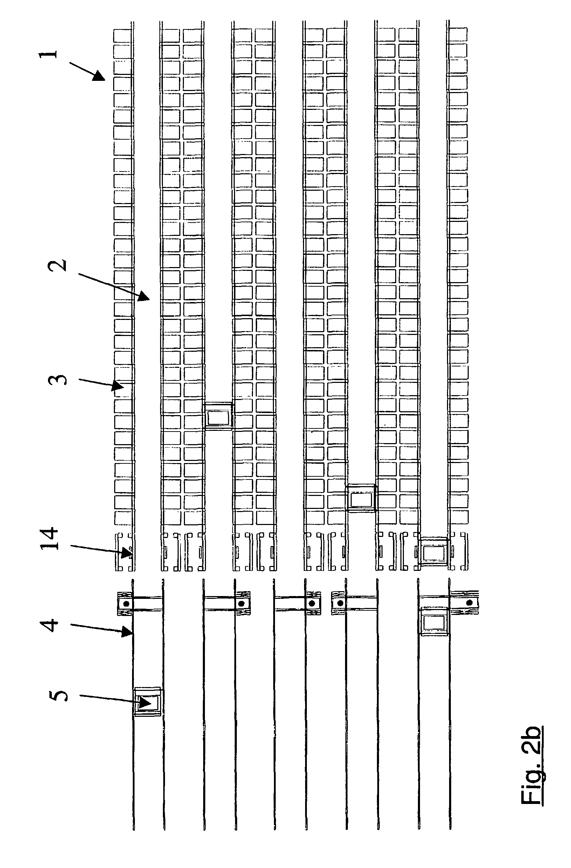

Die Figuren 1 bis 3 zeigen beispielhaft in Seitenansicht (Fig. 1), Frontalansicht (Fig. 2a) und Draufsicht (Fig. 2b) einen Lagerbereich des vorliegenden Lager- und Transportsystems gemäß einem Ausführungsbeispiel. Der dargestellte Lagerbereich besteht aus verschiedenen nebeneinander angeordneten Regalen 1, zwischen denen Regalgassen 2 gebildet werden. Die einzelnen Regale nehmen Lagergüter 3 in verschiedenen Ebenen auf, wie dies schematisch in den Figuren 1 und 2a ersichtlich ist. An den Regalen bzw. Regalzeilen 1 selbst sind in jeder Ebene Führungsprofile ausgebildet, die Schienenwege 4 für die vorliegenden Fahrzeuge 5 bilden. Die Fahrzeuge 5 fahren in den verschiedenen Ebenen zwischen den Regalen 1 auf den Schienen und geben an den entsprechenden Stellen das Lagergut in den Lagerschacht ab oder nehmen es von diesem auf. In den Figuren sind hierbei einzelne Fahrzeuge 5 mit dem darauf befindlichen Lagergut 3 zu erkennen. In diesem Beispiel sind an den Stirnseiten der Regale 1 querverlaufende, von der Decke abgehangene Schienen 4a zu erkennen, über die die einzelnen Fahrzeuge 5 von einer Regalgasse in eine andere Regalgasse verfahren werden können. Der Transport zwischen den verschiedenen Ebenen erfolgt über ebenfalls an der Stirnseite der Regale 1 vorgesehene Vertikalförderer 14, deren Förderrichtung im linken Teil der Figur 1 durch den Pfeil angedeutet ist.

Das gleiche System ist schematisch in vereinfachter Darstellung anhand der Figur 2 in Vorderansicht (a) zur Verdeutlichung der Vertikalförderer 14 und der querverlaufenden Schienen 4a und in Draufsicht (b) von oben zu erkennen. Die Ansicht von oben zeigt die Regalgassen 2 mit vorgeschaltetem Vertikalförderer 14 und den Schienenansatz in der Vorzone.

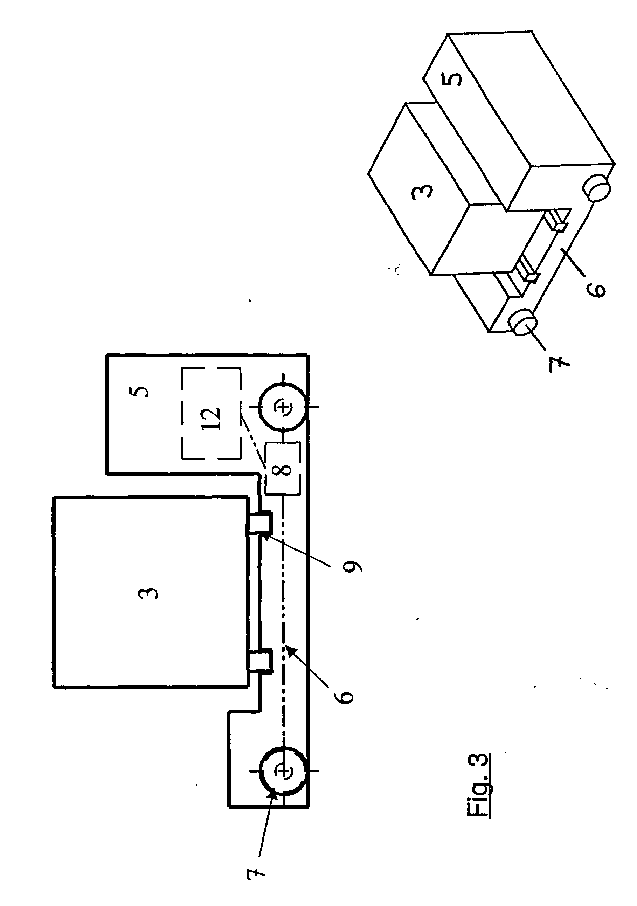

Figur 3 zeigt ein Beispiel für die Ausgestaltung eines Satellitenfahrzeuges gemäß der vorliegenden Erfindung in schematischer Darstellung in perspektivischer sowie in Seitenansicht. Das Fahrzeug besteht aus einem Fahrgestell 6 mit Antriebsrädern 7, die in den nicht dargestellten Schienen laufen, den Antrieben 8 sowie einem Aufnahmemittel 9 zur Aufnahme der Lagergüter 3. Das Lagergut 3 ist in diesem Beispiel schematisch als quaderförmige Kiste angedeutet. Wie aus der Figur ersichtlich ist, lässt sich das Lagergut 3 quer zur Fahrtrichtung vom Fahrzeug 5 aufnehmen bzw. abgeben.

Die Fahrzeuge 5 sind in Leichtbauweise ausgeführt. Bei der Ausgestaltung der Steuerung und Energieversorgung kommen modernste Steuerungs- und Energieübertragungskonzepte zum Einsatz. Die Fahrzeuge 5 weisen keinerlei mobile Rechnertechnik sowie keine schwere Energiespeichertechnik auf. Weiterhin werden bei den Fahrzeugen 5 keine unnötigen Mehrfachantriebe eingesetzt. Durch die Gewährleistung eines leichten Fahrzeuges 5 ohne aufwendige mitfahrende Komponenten stellt die Realisierung des Regalbaus, des Fahrzeuges und des Schienensystems im vorliegenden Fall eine wirtschaftliche Investition dar. Die Preisklasse, in der die Serienfahrzeuge vertrieben werden können, liegt in der Kategorie von staufähigen Stetigfördertechniken, so dass ein Einsatz der vorliegenden Fahrzeuge anstelle einer Stetigfördertechnik aus wirtschaftlichen Gründen keinen Nachteil darstellt.

Nur zur Abdeckung kurzzeitiger Leistungsspitzen wird Energie auf dem Fahrzeug gespeichert. Hierzu werden im vorliegenden Beispiel sog. Powercaps 12 in das Fahrzeug eingebaut. Dabei handelt es sich um ein Energiespeichermedium auf Kondensatorbasis. Die sehr leichten Speichermedien eignen sich hervorragend zum Einsatz im Intervallbetrieb. Eine stetige Energiezuführung (Schwachstrom) wird entweder mittels Schleifkontakten oder berührungsloser Energieübertragung realisiert. In der Behälterfördertechnik kann die Stromzuführung über die Fahrschienen erfolgen, wobei jeweils eine Schiene mit einem positiven, die andere Schiene mit einem negativen Spannungspotential beaufschlagt wird. Die Energieabnahme kann zwischen den Laufrädern 7 des Fahrzeuges 5 mittels Schleifkontakten erfolgen. Bei diesem Konzept müssen alle Schienen mit Strom beaufschlagt werden. Hierbei ist es notwendig, eine maximale Spannung von 24 V aufzubringen, um die Unbedenklichkeit beim Einsatz in einem Lager nachzuweisen. Daher eignet sich diese Variante vorzugsweise zum Behältertransport. Die Schienenverlegung beim Transport im Gebäude kann hierbei an der Hallendecke erfolgen.

In einer anderen Variante erfolgt die Energieübertragung mit einer berührungslosen Energieübertragungstechnik, wie sie bspw. aus der DE 197 26 840 A1 oder aus der EP 1 011 187 A1 bekannt ist. Die berührungslose Energieübertragung ermöglicht es, bewegte Systeme verschleißfrei und ohne mitzuführende Energiespeicher mit Energie zu versorgen. Um die Übertragerelemente möglichst klein zu halten, wird die Energie magnetisch mit Mittelfrequenz übertragen. Das Übertragungssystem besteht im Wesentlichen aus einer ausgedehnten primären und einer beweglichen sekundären Spulenanordnung, die über einen Luftspalt gekoppelt sind. Auf der Primärseite des Übertragungssystems befindet sich ein Wechselrichter, der dem Übertragungssystem einen mittelfrequenten Strom bzw. eine mittelfrequente Spannung einprägt. Sekundärseitig speist ein zweiter Stromrichter aus dem Übertragungssystem einen Verbraucher, in der Regel den Antrieb des bewegten Systems. Dieser Wechselrichter hat die Aufgabe, die Wirkleistung einzustellen und die entstehende Blindleistung zu minimieren.

Bei der Energieversorgung über Schleifkontakte ist es von Vorteil, zur Abdeckung von Leistungsspitzen auf Kondensatortechnik basierende Energiespeicher in den Fahrzeugen vorzusehen, wie diese bereits oben ausgeführt wurde. Während beim Einsatz herkömmlicher Akkumulatoren das Verhältnis zwischen Lade- und Betriebszeit häufig nicht für den materialflusstechnischen Betrieb mit seinen systemimmanent niedrigen Standzeiten geeignet ist, lassen sich auf Kondensatoren basierende Systeme in diesem Bereich sehr vorteilhaft einsetzen. Zur Speicherung von Energie bietet sich in diesem Falle der Einsatz von Kondensatoren auf Basis von Powercaps- bzw. Ultracaps-Technologien an. Diese von der Firma Siemens Matsushita Components (S+M) entwickelte Technologie basiert auf einem Doppelschichtkondensator ohne Dielektrikum. Die Energiespeicherung erfolgt durch Ladungsverschiebung an der Grenzfläche zwischen Elektrode und Elektrolyt. Die folgende Tabelle zeigt einen Vergleich der für den Betrieb der Fahrzeuge wesentlichen Parameter beim Einsatz von Akkumulatoren gegenüber dem Einsatz von Ultracaps und konventionellen Kondensatoren. Die Unterschiede in der Lade- und Entladezeit sowie der Energie bzw. Leistung pro eingesetztem Speichergewicht sind aus dieser Tabelle deutlich ersichtlich.

Beim Einsatz in Elektrofahrzeugen muss beim Beschleunigen wesentlich mehr Energie bereitgestellt werden als während der normalen Fahrt. Die hier eingesetzten Ultracaps können die während der Beschleunigung benötigte Energie bereitstellen und während der Fahrten durch die niedrige Energiezufuhr per Schleifkontakt nachgeladen werden. Selbstverständlich besteht auch die Möglichkeit der Aufladung durch Energierückspeisung beim Bremsen.

Der besondere Vorteil dieser Speichertechnik besteht im leichten Gewicht der Speicher sowie in der ausreichend zur Verfügung stellbaren Energiemenge.

Die Steuerung der einzelnen Fahrzeuge 5 erfolgt mittels Funkübertragung von Feldbusdaten. Ein zentraler Materialflussrechner verwaltet die Aufträge und übermittelt die Fahrbefehle an das jeweilige Fahrzeug. Hierbei werden durch den zentralen Steuerrechner direkt die Antriebe 8 für die Fortbewegung oder für die Bedienung der Lastaufnahmemittel angesteuert. Der zentrale Steuerrechner erhält von den einzelnen Fahrzeugen im Gegenzug die erforderlichen Daten über deren momentane Position, die in bekannter Weise über entsprechende Sensorsysteme von den Fahrzeugen erfasst werden. Der zentrale Steuerrechner übernimmt die Fahrwegoptimierung, Fahrkurssteuerung, Kollisionsvermeidung, Weichenstellung und Liftsteuerung.

Der Zentralrechner übernimmt die Steuerung und Navigation aller eingesetzten Fahrzeuge. Zur Übertragung der Befehle kann ein Feldbus-Fernkoppler beliebige Bus Slavemodule ansteuern. Die Funkstrecken können Entfernungen bis zu 10 km überbrücken.

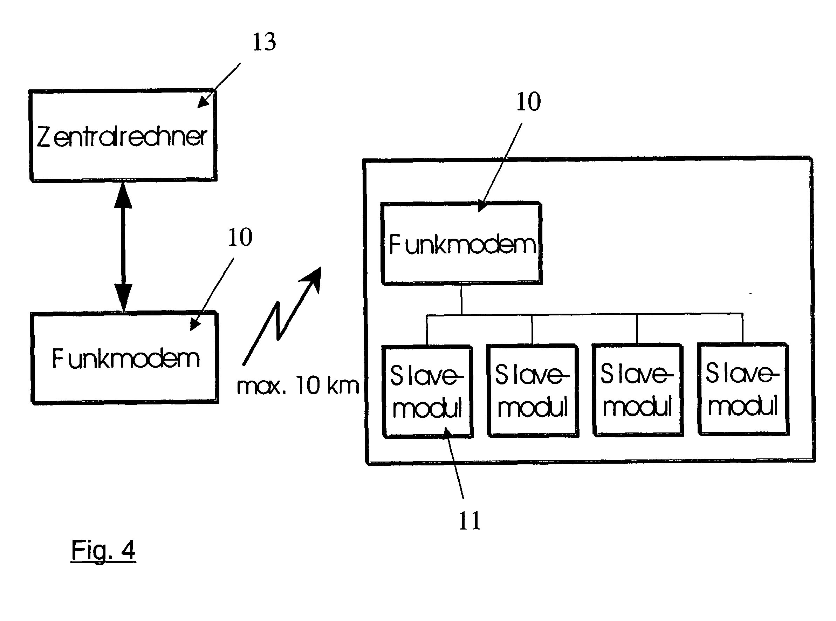

Figur 4 zeigt ein Beispiel für eine prinzipielle Ausgestaltung einer derartigen Funkübertragung, bei der auf der Seite des Zentralrechners 13 ein Steuermodul mit einem Funkmodem 10 und auf der Seite der Fahrzeuge 5 ein weiteres Funkmodem 10 mit entsprechenden Slavemodulen 11 zur Umsetzung der empfangenen Steuerbefehle vorgesehen ist. Derartige Systeme sind kommerziell erhältlich und werden bspw. durch die Firma ISK Automation GmbH, Raststatt vertrieben.

### Bezugszeichenliste

- 1: Regal bzw. Regalzeile
- 2: Regalgasse
- 3: Lagergüter
- 4, 4a: Schienen, Schienenwege
- 5: Fahrzeuge
- 6: Fahrgestell
- 7: Antriebsräder
- 8: Antrieb
- 9: Lastaufnahmemittel
- 10: Funkmodul
- 11: Slavemodul
- 12: Energiespeicher/Kondensatoren/Powercaps
- 13: Steuerrechner
- 14: Vertikalförderer

## Patentansprüche

1. Lager- und Transportsystem mit
- einer beliebigen Anzahl Regalzeilen (1) zur Aufnahme von Lagergut (3) in mehreren Regalebenen;
- einer Vielzahl von Schienenwegen (4, 4a), die auf Höhe der einzelnen Regalebenen zwischen den Regalzeilen (1) angeordnet sind;
- mehreren schienengebundenen Fahrzeugen (5) mit Mitteln (9) zur Aufnahme und Abgabe des Lagergutes (3), einem Fahrwerk (6, 7) sowie Antrieben (8) zur Fortbewegung auf den Schienenwegen (4, 4a); und
- Mitteln zur Umsetzung der Fahrzeuge (5) zwischen den Regalebenen;
wobei sich die Schienenwege (4, 4a) auch in einer Vorzone vor den Regalzeilen (1) bis hin zu Zielpunkten für das Lagergut (3) erstrecken und dass Mittel zur kabellosen, externen Energieversorgung der Fahrzeuge (5) während ihres Betriebes und ein zentraler Steuerrechner (13) zur direkten Steuerung der Fahrzeuge (5) für die Durchführung von Transportaufgaben vorgesehen sind, **dadurch gekennzeichnet, dass** der Steuerrechner (13) zur unabhängigen Ansteuerung der Antriebe (8) und der Mittel (9) zur Aufnahme und Abgabe des Lagergutes der einzelnen Fahrzeuge (5) über eine Funkverbindung ausgebildet ist und die Fahrzeuge (5) mit einem Empfangssystem (10, 11) zum Empfang und zur Umsetzung der vom Steuerrechner (13) übermittelten Steuersignale ausgestattet sind und dass die Fahrzeuge (5) einen Energiespeicher (12) für eine kurzzeitige Energiespeicherung unter Verzicht auf herkömmliche Akkumulatortechnik aufweisen.

2. Lager- und Transportsystem nach Anspruch 1,
**dadurch gekennzeichnet,**
**dass** der Steuerrechner (13) Mittel zur Ermittlung eines optimalen Fahrweges für die Fahrzeuge (5) unter Vermeidung von Kollisionen zwischen den Fahrzeugen (5) bei Durchführung der Transportaufgaben aufweist.

3. Lager- und Transportsystem nach Anspruch 1 oder 2,
**dadurch gekennzeichnet,**
**dass** der Steuerrechner (13) Einheiten zur Ansteuerung von Weichen und zur Ansteuerung der Mittel zur Umsetzung der Fahrzeuge (5) zwischen den Regalebenen aufweist.

4. Lager- und Transportsystem nach einem der Ansprüche 1 bis 3,
**dadurch gekennzeichnet,**
**dass** die Mittel zur externen Energieversorgung der Fahrzeuge (5) eine Einrichtung zur Beaufschlagung der Schienenwege (4, 4a) oder entlang der Schienenwege (4, 4a) verlaufender Leiterpaare mit einer elektrischen Spannung zwischen den Schienen (4, 4a) bzw. Leitern sowie eine Einheit am Fahrzeug (5) zur elektrischen Kontaktierung der Schienen (4, 4a) bzw. Leiter mittels zumindest eines Schleifkontaktes aufweisen.

5. Lager- und Transportsystem nach einem der Ansprüche 1 bis 3,
**dadurch gekennzeichnet,**
**dass** die Mittel zur externen Energieversorgung der Fahrzeuge (5) eine Einrichtung zur berührungslosen Energieübertragung zu den Fahrzeugen (5) umfassen.

6. Lager- und Transportsystem nach einem der Ansprüche 1 bis 5,
**dadurch gekennzeichnet,**
**dass** die Schienen der Schienenwege (4, 4a) eine unterste Auflage für das Lagergut (3) in den Regalebenen bilden.

7. Lager- und Transportsystem nach einem der Ansprüche 1 bis 6,
**dadurch gekennzeichnet,**
**dass** sich der Energiespeicher (12) aus Kondensatoren zusammensetzt.

8. Lager- und Transportsystem nach einem der Ansprüche 1 bis 7,
**dadurch gekennzeichnet,**
**dass** die Mittel zur Umsetzung der Fahrzeuge (5) zwischen den Regalebenen Vertikalförderer sind.

## Claims

1. Storage and materials-handling system having
- any desired number of lines of shelves (1) to receive storable goods (3) on a plurality of shelving levels,
- a plurality of railed tracks (4, 4a) which are arranged between the lines of shelves (1) on a level with the individual shelving levels,
- a plurality of rail-borne vehicles (5) having means (9) for receiving and off-loading the storable goods (3), and having running gear (6, 7) and drives (8) for locomotion on the railed tracks (4, 4a),
- and means for changing the vehicles (5) between the shelving levels, the railed tracks (4, 4a) also extending, in a preliminary zone preceding the lines of shelves (1), to destination points for the storable goods (3) and means being provided for the non-cabled supply of energy from outside to the vehicles (5) while they are operating, and a central controlling computer (13) being provided for the direct control of the vehicles (5) for the purpose of carrying out materials-handling tasks, **characterised in that** the controlling computer (13) is designed for the separate actuation, by means of a radio link, of the drives (8) of the individual vehicles (5) and of the means (9) which they have for receiving and off-loading the storable goods, and the vehicles (5) are fitted with a receiving system (10, 11) for receiving and converting the control signals transmitted by the controlling computer (13), and **in that** the vehicles (5) have an energy storage means (12) for the short-term storage of energy which dispenses with conventional storage battery technology.

2. Storage and materials-handling system according to claim 1, **characterised in that** the controlling computer (13) has means for determining an optimum route for the vehicles (5) which prevents collisions between the vehicles (5) when carrying out their materials-handling tasks.

3. Storage and materials-handling system according to claim 1 or 2, **characterised in that** the controlling computer (13) has units for actuating rail points and for actuating the means for changing the vehicles (5) between the shelving levels.

4. Storage and materials-handling system according to one of claims 1 to 3, **characterised in that** the means for the supply of energy from outside to the vehicles (5) have an arrangement for applying, to the railed tracks (4, 4a) or to pairs of conductors extending along the railed tracks (4, 4a), a voltage between the rails (4, 4a) or conductors in the respective cases, and a unit on the vehicle (5) for making electrical contact with the rails (4, 4a) or conductors in the respective cases by means of at least one sliding contact.

5. Storage and materials-handling system according to one of claims 1 to 3, **characterised in that** the means for the supply of energy from outside to the vehicles (5) comprise an arrangement for the non-contacting transmission of energy to the vehicles (5).

6. Storage and materials-handling system according to one of claims 1 to 5, **characterised in that** the rails of the railed tracks (4, 4a) represent a lowest support level for the storable goods (3) on the shelving levels.

7. Storage and materials-handling system according to one of claims 1 to 6, **characterised in that** the energy storage means (12) is made up of capacitors.

8. Storage and materials-handling system according to one of claims 1 to 7, **characterised in that** the means for changing the vehicles (5) between the shelving levels are vertical transporters.

## Revendications

1. Système de transport et de stockage qui comporte
- un nombre quelconque de rangées de rayonnages (1) destinées à recevoir une marchandise stockable (3) sur plusieurs niveaux de rayonnages ;
- un grand nombre de voies ferrées (4, 4a) qui sont disposées entre les rangées de rayonnages (1) à hauteur des niveaux de rayonnages individuels ;
- plusieurs véhicules sur rail (5) qui comportent des moyens (9) destinés à recevoir et délivrer la marchandise stockable (3), un dispositif de déplacement (6, 7) ainsi que des dispositifs d'entraînement (8) destinés à les déplacer sur les voies ferrées (4, 4a) ; et
- des moyens destinés à faire passer les véhicules (5) d'un niveau de rayonnages à l'autre ;
dans lequel les voies ferrées (4, 4a) s'étendent également dans une zone avant, située devant les rangées de rayonnages (1), jusqu'aux points de destination de la marchandise stockable (3) et dans lequel il est prévu des moyens d'alimentation en énergie, externe et sans câble, des véhicules (5) pendant leur fonctionnement et un ordinateur de commande central (13) destiné à commander directement les véhicules (5) pour remplir des tâches de transport, **caractérisé en ce que** l'ordinateur de commande (13) est conformé pour commander indépendamment les dispositifs d'entraînement (8) et les moyens (9), destinés à recevoir et délivrer la marchandise stockable, des véhicules individuels (5) par une liaison hertzienne et les véhicules (5) sont équipés d'un système de réception (10, 11) destiné à recevoir et à convertir les signaux de commande transmis par l'ordinateur de commande (13) et **en ce que** les véhicules (5) comportent un accumulateur d'énergie (12) destiné à accumuler de l'énergie pendant un laps de temps court en se passant de la technique des accumulateurs classique.

2. Système de transport et de stockage selon la revendication 1, **caractérisé en ce que** l'ordinateur de commande (13) comporte des moyens permettant de déterminer un chemin optimal de déplacement des véhicules (5) en évitant des collisions entre les véhicules (5) pendant le déroulement des tâches de transport.

3. Système de transport et de stockage selon la revendication 1 ou 2, **caractérisé en ce que** l'ordinateur de commande (13) comporte des unités destinées à commander des aiguillages et à commander des moyens permettant de faire passer les véhicules (5) d'un niveau de rayonnages à l'autre.

4. Système de transport et de stockage selon l'une des revendications 1 à 3, **caractérisé en ce que** les moyens d'alimentation en énergie externe des véhicules (5) comportent un dispositif d'alimentation des voies ferrées (4, 4a) ou des paires de conducteurs, s'étendant le long des voies ferrées (4, 4a), avec une tension électrique entre les voies ferrées (4, 4a) ou conducteurs ainsi qu'une unité située sur le véhicule (5) et destinée à établir le contact électrique avec les voies ferrées (4, 4a) respectivement conducteurs au moyen d'au moins un contact par frottement.

5. Système de transport et de stockage selon l'une des revendications 1 à 3, **caractérisé en ce que** les moyens d'alimentation en énergie externe des véhicules (5) comportent un dispositif de transfert d'énergie sans contact aux véhicules (5).

6. Système de transport et de stockage selon l'une des revendications 1 à 5, **caractérisé en ce que** les rails des voies ferrées (4, 4a) forment un support inférieur pour la marchandise stockable (3) dans les niveaux de rayonnages.

7. Système de transport et de stockage selon l'une des revendications 1 à 6, **caractérisé en ce que** l'accumulateur d'énergie (12) est constitué de condensateurs.

8. Système de transport et de stockage selon l'une des revendications 1 à 7, **caractérisé en ce que** les moyens permettant de faire passer les véhicules (5) d'un niveau de rayonnage à l'autre sont des élévateurs.
